# EUROPÄISCHE PATENTANMELDUNG

(11) **EP 0 825 135 A1**
(43) Veröffentlichungstag der Anmeldung: **25.02.1998**
(21) Anmeldenummer: 97100129.2
(22) Anmeldetag: 07.01.1997
(51) Int. Cl.: B65G 17/42

(54) **Förderelement mit daran befestigtem Transportkörper**

(30) Priorität: 12.08.1996 DE 29613941 U
(71) Anmelder: Gerhard Schubert GmbH, D-74564 Crailsheim (DE)
(72) Erfinder: Schubert, Gerhard, 74564 Crailsheim (DE); Fohrer, Helmut, 74594 Kressberg-Haselhof (DE)
(74) Vertreter: Alber, Norbert

(57) **Zusammenfassung**

Die Erfindung betrifft ein Förderelement mit Transportkörper, das hinsichtlich Montage und Bedienungskomfort gegenüber dem Stand der Technik wesentlich verbessert ist, und sich mit einem einfachen Befestigungsmechanismus befestigen läßt. Ein derartiges Förderelement mit daran befestigtem Transportkörper, bestehend aus einem Förderelement (9) mit quer zur Transportrichtung verlaufenden Querstreben (3), an denen der Transportkörper (10) befestigt ist, kennzeichnet sich dadurch, daß eine Befestigungseinrichtung die Ebene des Förderelements (9) durchdringt und die Montage des Transportkörpers (10) auf dem Förderelement (9) nur von einer Seite der Ebene des Förderelements (9) her möglich ist.

## Beschreibung

Die Erfindung betrifft ein Förderelement mit daran befestigtem Transportkörper; insbesondere einen auf besonders leichte Art und Weise auf dem Förderelement montierbaren Transportkörper mit einfachem Befestigungsmechanismus.

Förderelemente mit daran befestigtem Transportkörpern finden dort Einsatz, wo Produkte sortiert, gruppiert oder einfach nur zum nächsten Arbeitsschritt befördert werden müssen. Die Produkte werden dabei meist einzeln in einer Produktaufnahme des Transportkörpers befördert. Nachteile bestehender Förderelement-Transportkörpersysteme entstehen durch deren umständliche Montage und den hohen benötigten Zeitaufwand beim Wechseln der Transportkörper auf dem Förderelement, wenn zum Beispiel auf neue Produkttypen umgestellt werden soll.

Bei den bekannten Ausführungsformen der Transportkörper ist der Zugang des Förderelements von mindestens zwei Seiten notwendig. Zusätzlich ist die Bedienung der bekannten Schraub- bzw. Klemmverbindungen relativ kompliziert und zeitaufwendig.

Der Erfindung liegt die Aufgabe zugrunde, ein Förderelement mit Transportkörper zu schaffen, das hinsichtlich Montage und Bedienungskomfort wesentlich verbessert ist, und sich mit einem einfachen Befestigungsmechanismus befestigen läßt.

Gelöst wird diese Aufgabe gemäß der Erfindung durch ein Förderelement mit daran befestigtem Transportkörper, das sich von einer Seite der Ebene des Förderelements montieren läßt, wobei die Befestigungseinrichtung diese Ebene durchdringt und den Transportkörper mit dem Förderelement verbindet.

Das erfindungsgemäße Förderelement umfaßt einen Transportkörper mit hakenförmig ausgebildetem Bereich, der an den vorzugsweise runden Querstreben des Förderelements einhakt und wodurch der Transportkörper auf die Ebene des Förderelements aufgekippt werden kann.

Eine andere Querstrebe des Förderelements wird dabei in eine Aufnahme, z.B. zwischen dem Befestigungsmechanismus in geöffneter Position und einem nasenförmigen Fortsatz des Transportkörpers, eingeführt. Nach einer Drehung des Verriegelungsbolzens des Befestigungsmechanismus rastet dieser in seiner geschlossenen Position ein und verriegelt Förderelement und Transportkörper formschlüssig. Die Einrastvorrichtung kann aus einem Kugel-Feder-System bestehen, wobei die Kugel in geschlossener Position des Verriegelungsbolzens in einer Bohrung in der Wand des Transportkörpers einrastet.

Eine andere Möglichkeit der Verbindung von Transportkörper und Förderelement besteht darin, den Transportkörper mit wenigsten zwei Befestigungseinrichtungen zu verriegeln, die zum Beispiel symmetrisch zur Mitte des Transportkörpers (auf zwei verschiedene Querstreben des Förderelements einwirkend) angeordnet sind. Der Transportkörper wird von oben auf das Förderelement aufgesetzt und durch Drehung der wenigstens zwei Verriegelungsbolzen verriegelt. Dabei können die Verriegelungsbolzen auch exzentrisch gelagert sein.

Eine weitere Möglichkeit der Verbindung von Förderelement und Transportkörper ist eine rein elastische Klemmverbindung. Der Transportkörper hat dabei wenigstens zwei spangenförmige Fortsätze, die die Ebene des Förderelement durchdringen und Aussparungen aufweisen, die die Querstreben des Förderelements aufnehmen und elastisch festklemmen. Zum Montieren des Transportkörpers ist lediglich erhöhter Druck von der Oberseite des Transportkörpers her und zum Entfernen kräftiger Zug notwendig.

Durch die vorgeschlagenen Ausbildungsformen ist es möglich, den Transportkörper einfach, zuverlässig und schnell auf dem Förderelement zu befestigen.

Die Erfindung wird nachstehend anhand der Figuren 1 bis 3 beispielsweise erläutert. Es zeigen:
- Figur 1: eine Vorderansicht des erfindungsgemäßen Förderelements 3 mit Transportkörper, und
- Figur 2: eine Seitenansicht des erfindungsgemäßen Förderelements mit Transportkörper und Befestigungseinrichtung.

Der Transportkörper 10, der zur Aufnahme der Produkte eine meist nach oben offene Produktaufnahme 1 aufweist, ist mit den Querstreben 3 des Förderelements 9 im montierten Zustand fest, vorzugsweise formschlüssig, verbunden, um von diesem Förderelement 9 mitbewegt zu werden.

Zum einfachen Verbinden (oder Entfernen) des Transportkörpers 10 mit den Querstreben 3, die in der Regel kreisförmigen Querschnitt besitzen, weist der Transportkörper 10 in seinem unteren Bereich mehrere Aussparungen 5a, b, c zur formschlüssigen Aufnahme der Querstreben 3 auf.

Eine erste Aussparung 5a befindet sich in einer der parallel zu den Querstreben 3 verlaufenden Stirnseiten des Transportkörpers 10, wodurch ein sich unterhalb der darin aufzunehmenden ersten Querstrebe 3 erstreckender Haken 7, welcher einstückig mit dem Transportkörper 10 verbunden ist, gebildet wird.

Die beiden anderen Aussparungen 5b, 5c und eventuell weitere Aussparungen befinden sich in der Unterseite des Transportkörpers 10, so daß beim Einführen der ersten Querstrebe 3 in die Aussparung 5a, indem der Transportkörper 10 schräg zur Ebene des Förderelementes 9 geschoben wird, und anschließendes herabklappen des Transportkörpers 10 um die in der ersten Aussparung 5a befindliche erste Querstrebe 3 in die anderen nach unten offenen Aussparungen 5b, 5c .... jeweils die Querstreben 3 des Förderelementes 9 aufgenommen werden und der Transportkörper 10, insbesondere dessen Produktaufnahme 1, waagerecht zur Ebene des entsprechenden Trums des Förderelementes 9 verläuft.

Die Anzahl der weiteren Aussparungen 5b, 5c .... richtet sich nach der Länge des Transportkörpers 10 in Transportrichtung des Förderelementes 9, und die Dimensionierung und der Abstand dieser weiteren Aussparungen 5b, 5c hängt von der Dimensionierung des Förderelementes 9 und dessen Querelementen ab.

Ebenso ist eine Ausbildung mit nur einer weiteren Aussparung 5b denkbar, bei entsprechend kurzem Transportkörper 10.

Nachdem der Transportkörper 10 in seine zu dem Förderelement 9 parallele Lage heruntergeklappt ist, in der er sich bis unterhalb der Ebene des Förderelementes 9 erstreckt, wird das Zurückklappen verhindert, indem eine der Querstreben 3, die in einer der weiteren Aussparungen 5b, 5c, .... aufgenommen ist, dort formschlüssig mittels eines im Transportkörper 10 gelagerten Verriegelungsbolzens 11 gesichert wird, vorzugsweise die am weitesten von der ersten Aussparung 5a entfernte, im Transportkörper 10 aufgenommene Querstrebe 3.

Zu diesem Zweck erstreckt sich der Verriegelungsbolzen 11 drehbar, jedoch paßgenau mit einer Orientierung senkrecht zur Ebene des Förderelementes 9 und damit auch senkrecht bzw. windschief zu der ihm zugeordneten Querstrebe 3 so im Transportkörper 10, daß eine seiner Stirnseiten in der Oberseite oder der Unterseite des Transportkörpers 10 endet und von dort durch Ansetzen eines Werkzeuges wie eines Schraubenziehers etc. gedreht werden kann.

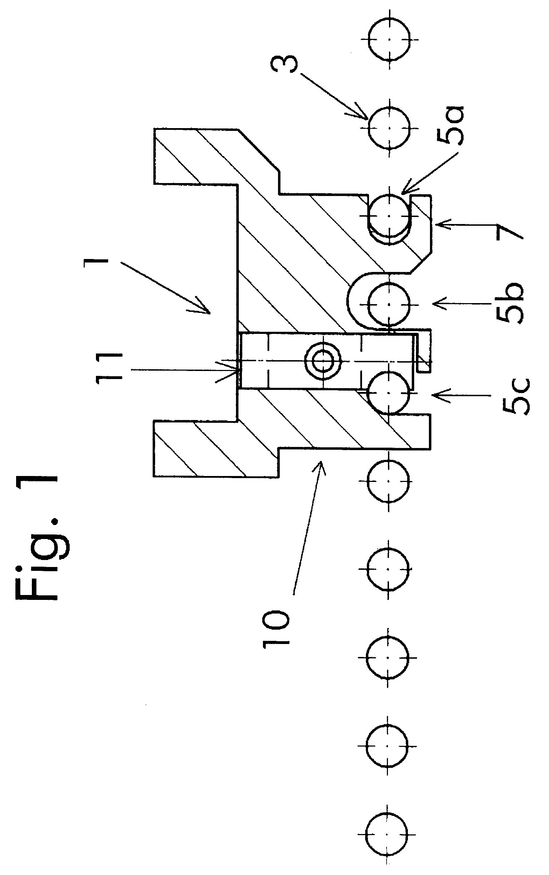

In Fig. 1 endet der Verriegelungsbolzen 11 knapp unterhalb der Bodenfläche der Produktaufnahme 1 in der Oberseite des Transportkörpers 10 und sitzt mit seiner unteren Stirnfläche am Boden eines entsprechenden Sackloches im Transportkörper 10 auf.

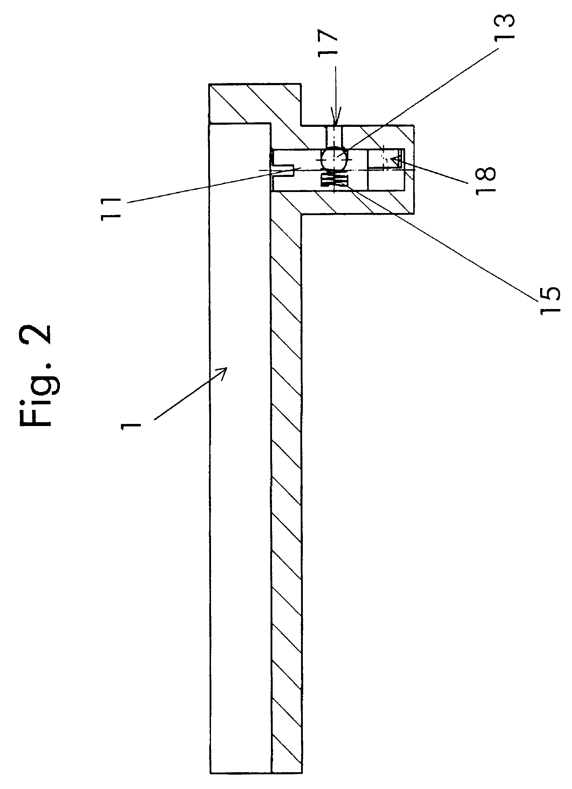

Die Längsachse des Verriegelungsbolzens 11 verläuft seitlich versetzt knapp neben dem Querschnitt der zu sichernden Querstrebe 3 des Förderelementes 9. Von seiner unteren Stirnfläche her ist - bis mindestens zur Oberkante der Querstreben 3 des Förderelementes 9 - der Querschnitt des Verriegelungsbolzens 11 etwa zur Hälfte entfernt (siehe Fig. 2), so daß der Verriegelungsbolzen 11 mit der verbleibenden Hälfte beim Einschieben von oben her problemlos an dem zu sichernden Förderelement 9 vorbeigeführt werden kann.

Die verbleibende Hälfte des Querschnittes des Verriegelungsbolzens 11 an dessen unterem Ende weist - bei Betrachtung des soeben eingeschobenenen Verriegelungsbolzens 11 in der Ebene des Förderelementes 9 um 90° gedreht, also betrachtet in Transportrichtung des Förderelementes 9- eine etwa halbkreisförmige Sicherungsaussparung 18 auf der Höhe und entsprechend der Größe des halben Querschnittes der zu sichernden Querstrebe 3 auf.

Wird nun nach Einsetzen des Verriegelungsbolzens 11 von oben her in den Transportkörper 10 dieser Verriegelungsbolzen 11 um 90° gedreht, so umschließt die Sicherungsaussparung 18 in der verbleibenden Querschnittshälfte des Verriegelungsbolzens 11 zur Hälfte den Querschnitt der Querstrebe 3, und umgreift damit auch die Unterseite der Querstrebe 3.

Damit wird die zu sichernde Querstrebe 3 sicher zwischen der einen Seitenwand der sie aufnehmenden Aussparung 5c sowie der Sicherungsaussparung 17 des Verriegelungsbolzens 11 gehalten.

Der Verriegelungsbolzen 11 selbst rastet in dieser verriegelnden Position ein, indem (siehe Fig. 1 und 2) im Inneren des Verriegelungsbolzens 11 oberhalb der Querstreben 3 eine Kugel 13 als Rastelement angeordnet ist, welche durch eine daran angreifende Druckfeder 15 quer zur Längsrichtung des Verriegelungsbolzens 11 beaufschlagt und damit aus der sie aufnehmenden Öffnung des Verriegelungsbolzens 11 radial nach außen gedrückt wird.

In der Verriegelungsposition liegt dieser Kugel 13 eine Bohrung 17 in der umgebenden Wandung des Transportkörpers 10 gegenüber, in welche die Kugel 13 aufgrund der sie beaufschlagenden Feder 15 etwas hineinragt und dadurch einrastet.

Zum Verdrehen des Verriegelungsbolzens 11 muß daher eine so große Kraft, z. B. mit Hilfe des in den Schlitz an der oberen Stirnseite des Verriegelungsbolzens 11 eingreifenden Schraubenziehers, aufgebracht werden, daß ein selbsttätiges Verdrehen des Verriegelungsbolzens 11 und damit Lösen des Transportkörpers 10 durch Erschütterungen während des Betriebes oder dgl. nicht vorkommen kann.

Da eine räumlich exakt definierte Anlieferung der Produkte in der Produktaufnahme 1 Voraussetzung für derartige Vorrichtungen sind, muß im verriegelten Zustand der Transportkörper 10 möglichst spielfrei an dem Förderelement 9 befestigt sein.

Zu diesem Zweck muß nicht nur die zu verriegelnde Querstrebe 3 spielfrei mit Hilfe des Verriegelungsbolzens 11 fixiert werden, sondern auch die in die erste, nach vorne gerichtete Aussparung 5a aufgenommene Querstrebe 3 muß zumindest hinsichtlich der Höhe, also quer zur Ebene des Förderelementes 9, spielfrei darin aufgenommen sein.

Die übrigen Aussparungen 5b u. a., die keine Befestigungsfunktion gegenüber den von ihnen aufgenommenen Querstreben 3 besitzen, sind dagegen so dimensioniert, daß die Querstreben 3 berührungslos und mit ausreichendem Seitenspiel in diesen Aussparungen z.B. 5b zu liegen kommen.

-

In diesem Fall muß allerdings bedacht werden, daß der in Fig. 1 ersichtliche Abstand zwischen dem Grunde der Ebene des Förderelementes verlaufenden Aussparung 5a und der darin aufgenommenen Querstrebe 3 darin besteht, daß im Fall einer Umlenkung dieses Förderelementes mit dem Transportkörper 10 um ein Ritzel oder eine Umlenkrolle sich der Abstand der in den Aussparungen 5a und 5c aufgenommenen Querstreben 3 verringern würde, und sich dadurch auch der Abstand zwischen dem Grund der Aussparung 5a und der darin aufgenommenen Querstrebe 3 verringern, ggf. bis auf 0 verringern würde. Dieser Effekt tritt besonders ausgeprägt dann auf, wenn in den Aussparungen 5a und 5c nicht zwei aufeinanderfolgende, sondern zwei weiter voneinander entfernt liegende Querstreben 3 aufgenommen werden, und je kleiner im Verhältnis dazu der Durchmesser der Umlenkrolle bzw. des Ritzels ist. Wenn nun anstelle der vorderen, in Richtung des Förderelementes verlaufenden Aussparung 5a eine analog zur Aussparung 5c mit Verriegelungsbolzen 11 ausgestattete Einheit verwendet würde, so geht dies nur dann, wenn in dem Transportkörper 10 nur zwei aufeinanderfolgende Querstreben 3 aufgenommen werden, oder die Verriegelung der Querstrebe 3 mittels eines Verriegelungsbolzens 11 in Förderrichtung soweit spielbehaftet ist, daß dadurch insgesamt die Abstandsverkürzung zwischen den innerhalb eines Transportkörpers 10 aufgenommenen Querstreben beim Umlenken um ein Ritzel oder eine Umlenkrolle ausgeglichen werden kann. Beispielsweise müßten bei mehreren Verriegelungsbolzen 11 in einem Transportkörper 10 die Verriegelungen bei allen Verriegelungsbolzen 11 spielbehaftet ausgeführt werden.

-

Werden dabei aufgrund der Kürze des Transportkörpers 10 nur zwei aufeinander folgende Querstreben 3 im Transportkörper 10 verriegelt, reicht zur Verriegelung ein einziger, dazwischen sich nach unten erstreckender Verriegelungsbolzen 11 aus, der dann beidseitig seiner Mitte Querschnittsabfräsungen und in dem verbleibenden Mittelsteg zwei Sicherungsaussparungen aufweist. Zusätzlich müßte dann der Durchmesser des Verriegelungsbolzens 11 dem Abstand der zwei aufeinanderfolgenden Querstreben 3, insbesondere an den freien Abstand zwischen diesen beiden benachbarten Querstreben 3, angepaßt sein.

Falls die Querstreben 3 keinen runden, sondern vieleckigen oder einen anders geformten Querschnitt besitzen, sollte die Form der Sicherungsaussparung 18 hieran angepaßt sein.

## Patentansprüche

1. Förderelement mit daran befestigtem Transportkörper, bestehend aus einem Förderelement (9) mit quer zur Transportrichtung verlaufenden Querstreben (3), an denen der Transportkörper (10) befestigt ist,
**dadurch gekennzeichnet, daß**
eine Befestigungseinrichtung die Ebene des Förderelements (9) durchdringt und die Montage des Transportkörpers (10) auf dem Förderelement (9) nur von einer Seite der Ebene des Förderelements (9) her möglich ist.

2. Förderelement nach Anspruch 1,
**dadurch gekennzeichnet, daß**
der Transportkörper (10) eine Aussparung (5a) hat, mit der sich der Transportkörper (10) an wenigstens einer Querstrebe (3a) des Förderelements (9) einhakt und sich um diese schwenken läßt.

3. Förderelement nach Anspruch 1 oder 2,
**dadurch gekennzeichnet, daß**
der Transportkörper (10) wenigstens einen Fortsatz aufweist, der die Ebene des Förderelements (9) durchdringt.

4. Förderelement nach Anspruch 1 bis 3,
**dadurch gekennzeichnet, daß**
die Befestigungseinheit aus einem drehbaren Verriegelungsbolzen (11) besteht.

5. Förderelement nach Anspruch 4,
**dadurch gekennzeichnet, daß**
der drehbare Verriegelungsbolzen (11) in seiner verriegelten Position einrastbar ist.

6. Förderelement nach Anspruch 4 und 5,
**dadurch gekennzeichnet, daß**
der drehbare Verriegelungsbolzen eine Sicherungsaussparung (18) aufweist, mittels der er mit dem Förderelement (9) formschlüssig verriegelbar ist.

7. Förderelement nach Anspruch 4 oder 5
**dadurch gekennzeichnet, daß**
der Verriegelungsbolzen eine radial abgeflachte Aussparung hat, mit der er sich in offener Position zwischen zwei Querstreben (3) des Förderelements (9) einführen läßt.

8. Förderelement nach Anspruch 1 und 2,
**dadurch gekennzeichnet, daß**
die Querstreben (3) des Förderelements (9) einen runden Querschnitt haben.

9. Förderelement nach einem der vorhergehenden Ansprüche,
**dadurch gekennzeichnet, daß**
die Befestigungseinrichtung in ihrer geschlossenen Position einrastet.

10. Förderelement nach einem der vorhergehenden Ansprüche,
**dadurch gekennzeichnet, daß**
die Einrasteinrichtung aus einem Kugel-Feder-System besteht, bei dem eine Kugel (13) mit einer Feder (15) vorgespannt ist und die Kugel in einer Bohrung (17) im Transportkörper einrastet, wenn der Verriegelungsbolzen (11) in seiner geschlossenen Position ist.
